**Europäisches Patentamt**

**European Patent Office**

**Office européen des brevets**

(11) Veröffentlichungsnummer: **0 103 200**
**A2**

## (12) EUROPÄISCHE PATENTANMELDUNG

(21) Anmeldenummer: **83108088.2**

(51) Int. Cl.³: **G 01 F 1/80**

(22) Anmeldetag: **16.08.83**

(30) Priorität: **16.08.82 DE 3240445**

(71) Anmelder: **Küppers, Karl, Dipl.-Ing., St.-Peter-Strasse 2, D-8060 Dachau (DE)**

(43) Veröffentlichungstag der Anmeldung: **21.03.84 Patentblatt 84/12**

(72) Erfinder: **Küppers, Karl, Dipl.-Ing., St.-Peter-Strasse 2, D-8060 Dachau (DE)**

(84) Benannte Vertragsstaaten: **AT BE CH FR GB IT LI NL SE**

(74) Vertreter: **Hieke, Kurt, Stadlerstrasse 3, D-8013 Haar bei München (DE)**

(54) **Massedurchflussmesser.**

(57)   Es wird ein Massedurchflußmesser der Gattung vorgeschlagen, bei der durch Bewegen eines von dem Meßmedium durchströmten Schleifenteils in diesem eine Corioliskraft erzeugt wird, die den Schleifenteil proportional zum Massedurchfluß um eine Schwenkachse zu drehen trachtet, die zu der Achse senkrecht steht, um die die Winkelbewegung des Schleifenteils stattfindet. Bei den bekannten Massedurchflußmessern ist die Winkelbewegung eine Schwingbewegung. Im Zusammenhang damit können sich Verfälschungen zwischen dem tatsächlichen Massedurchfluß und der hieraus resultierenden Corioliskraft ergeben, und zwar insbesondere mediumspezifisch aber auch infolge von beitriebsbedingten Änderungen der physikalischen Eigenschaften eines bestimmten Meßmediums. Diese Schwierigkeiten werden bei dem erfindungsgemäßen Massedurchflußmesser dadurch vermieden, daß der Schleifenteil nicht in Schwingbewegung sondern in Rotation versetzt wird, so daß auch die Corioliskraft stets in gleicher Richtung um die Schwenkachse auf den Schleifenteil einwirkt, wodurch jeglicher Schlupf zwischen dem Schleifenteil und dem diesen durchfließenden Meßmediums von vornherein ausgeschlossen ist.

In der Zeichnung ist der rotierende Schleifenteil mit 1c, sein Drehantrieb mit 5 und die Auslenkungen des Schleifenteils unter der Corioliskraft feststellenden Abtasteinrichtung mit 10 und 11 bezeichnet.

0103200

Karl Küppers, Dachau
"Massedurchflußmesser"

B e s c h r e i b u n g

Die Erfindung bezieht sich auf einen Massedurchflußmesser gemäß dem Oberbegriff des Patentanspruchs 1.

Bei den bekannten Massedurchflußmessern dieser Gattung besteht
der Schleifenteil aus einem U-förmig gebogenen Rohr das mit eingespannten Schenkeln nach Art einer Stimmgabel in Schwingbewegung versetzt wird. Das Rohr wird von dem Meßmedium durchströmt,
so daß es die schwingenden Schenkel in entgegengesetzten Richtungen bezüglich der Einspannstelle durchströmt. Durch die
Schwingung erfährt das Meßmedium in den Rohrschenkeln wechselweise Beschleunigungen, die eine mit der Schwingungsfrequenz
oszillierende Corioliskraft herbeiführen, welche auf die Rohrgabel ein Schwingmoment um eine zu den Schenkeln parallele, etwa in der Mitte zwischen diesen verlaufende Schwnkachse ausübt. Die durch die Corioliskraft verursachte Schwingung, deren
Amplitude zum Massendurchsatz proportional ist, wird gemessen
und in ein Anzeigesignal umgewandelt.

Bei dem bekannten Massedurchflußmesser ist die die Grundlage
für die Messung bildende Amplitude der von der Corioliskraft
verursachten Schwingung nur dann zu dem Massendurchsatz proportional, wenn jedes Masseteilchen unverfälscht an der
Schwingung teilnimmt. Dies ist aber wegen der dauernden Umbeschleunigungen des Meßmediums, die die Schwingbewegung der mit
sehr kleiner Amplitude schwingenden Rohrschleife herbeiführt,
in vielen Anwendungsfällen aus den verschiedensten Gründen, z.
B. Inhomogenitäten im Meßmedium, nicht gewährleistet. Aus diesem Grunde muß der bekannte Massedurchflußmesser für die jeweilige Anwendung, d.h. das betreffende Meßmedium, kalibriert
werden und ist nicht generell in weiten Grenzen für jedes beliebige Meßmedium mit einer einzigen Eichung verwendbar. Aber
auch bei vorgesehenem Gebrauch für ein bestimmtes Meßmedium
können Fehler durch Änderungen der Eigenschaften des Meßmediums
eintreten, die dieses bei sich ändernden Betriebsbedingungen
erfährt.

Demgemäß

Demgemäß liegt der Erfindung die Aufgabe zugrunde, einen Massedurchflußmesser der im Oberbegriff des Patentanspruchs 1 genannten Gattung zu schaffen, mit dem es möglich ist, in sehr
weiten Grenzen unterschiedliche Meßmedien, auch mit sich im
Betriebe ändernden Eigenschaften , insbesondere auch auftretenden Inhomogenitäten, mit hoher Genauigkeit zu messen, ohne
daß vorher eine mediumsspezifische Kalibrierung oder Eichung
vorgenommen werden muß.

Die vorstehende Aufgabe wird durch die im Kennzeichnungsteil
des Patentanspruchs 1 genannten Merkmale gelöst.

Bei dem erfindungsgemäßen Massedurchflußmesser erfährt das
Meßmedium beim Durchfluß durch den Schleifenteil keine Umbeschleunigungen, so daß immer gewährleistet ist, daß zwischen
dem Meßmedium und dem Schleifenteil kein Schlupf eintreten
kann. Da ein solcher Schlupf prinzipiell ausgeschlossen ist,
haben auch unterschiedliche Eigenschaften des Meßmediums auf
die Messung keinen Einfluß, so daß sich der erfindungsgemäße
Massedurchflußmesser gleichermaßen gut nach anfänglicher
Eichung oder Kalibrierung für die verschiedensten Meßmedien
eignet und bei ihm auch betriebsbedingte Änderungen bei einem
vorgegebenen Meßmedium wegen In-/homogenitäten durch Blasenbildung
und dgl.,keinen Einfluß auf die Genauigkeit des Meßergebnisses
haben. Hinzu kommt, daß sich der erfindungsgemäße Massedurchflußmesser konstruktiv einfach realisieren läßt und Ausgangssignale in einer Form zu liefern vermag, deren Aufbereitung
zu einem dem Durchfluß streng linear proportionalen Anzeigesignal keinerlei Schwierigkeiten bereitet.

Für die Schaffung eines solchen Anzeigesignals sieht die Erfindung in Verbindung mit den im Anspruch 1 gekennzeichneten
Merkmalen des Durchflußmessers verschiedene besonders vorteilhafte Ausführungen vor. Es kommen hierbei zwei Hauptprinzipien
zur Anwendung, von denen das erste generell im Patentanspruch
2 und in Unterformen in den Patentansprüchen 3 - 10 gekennzeichnet ist und das zweite hinsichtlich des generellen Prinzips

0103200

zips Gegenstand des Patentanspruchs 11 und hinsichtlich Unterformen hierzu Gegenstand der Patentansprüche 12 und 13 ist.

Nach dem im Anspruch 2 und den Ansprüchen 3 bis 11 gekennzeichneten einen Grundprinzip der Signalerzeugung und Aufbereitung
wird eine besonders hohe Genauigkeit und Linearität zwischen
dem Durchfluß und dem Anzeigesignal erreicht, und zwar in Form
einer reinen Kraftmessung an dem Schleifenteil. Demgegenüber
liegt dem anderen Grundprinzip gemäß Anspruch 11 - 13 die
Messung von Winkeländerungen zugrunde, die der Schleifenteil
unter der Corioliskraft durchflußabhängig und ebenfalls im
wesentlichen linear proportional erfährt. Auch dieses zweite
Grundprinzip liefert sehr genaue Meßergebnisse mit sehr guter
Linearität zwischen Durchsatz und Anzeigesignal.

Die weiteren Unteransprüche kennzeichnen bevorzugte konstruktive Ausgestaltungen des Massedurchflußmessers.

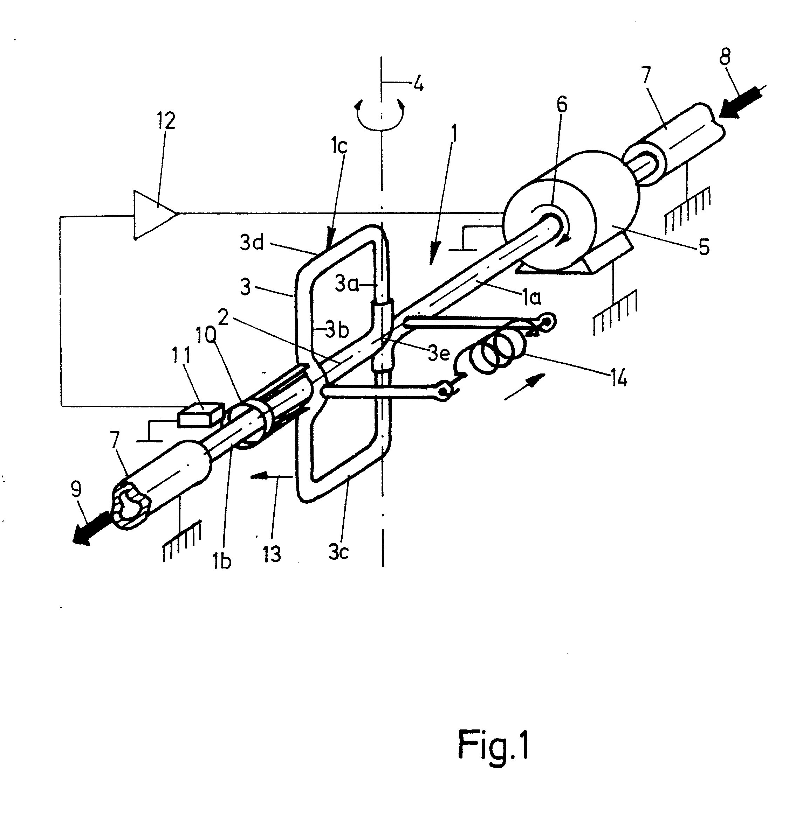

In der Zeichnung sind Ausführungsbeispiele des erfindungsgemäßen Durchflußmessers dargestellt, die nachstehend näher erörtert werden. Die Fig. 1 bis Fig. 5 zeigen die untereinander unterschiedlichen Ausführungen jeweils in schematischer Darstellung in perspektivischer Ansicht.

Die Ausführungen gemäß Fig. 1 - Fig. 5 haben verschiedene gemeinsame Merkmale, die vorweg erläutert werden.

Die Massedurchflußmesser gemäß Zeichnung weisen bei allen Ausführungen ein von dem Meßmedium, z.B. einer Flüssigkeit oder einem Gas, durchsetztes Rohr 1 auf, das zwischen Endabschnitten 1a, 1b mit einem Schleifenteil 1c versehen ist, der, jedenfalls bei Durchfluß 0 des Meßmediums, zu einer Dreh-achse 2 und einer diese beinhaltenden Ebene symmetrisch ist und hier eine einzige, sich über 360 Grad erstreckende sowie zu dieser Ebene im wesentlichen parallele vollständige Windung 3 aufweist. Prinzipiell könnten auch mehrere solche Windungen 3 im Schleifenteil 1c vorgesehen sein, die, nebeneinander angeordnet, in Serie untereinander verbunden sind, wodurch die nachstehend noch erörterte Corioliskraft entsprechend vervielfacht wird.

Die Windung 3 besteht aus zwei zur Drehachse 2 senkrechten Abschnitten 3a, 3b und zwei zur Drehachse 2 parallelen Abschnitten 3c, 3d, und sie weist eine Trennstelle 3e auf, die es ermöglicht, das über den Rohr-Endabschnitt 1a zufließende Medium in den Schleifenteil 1c einzuspeisen und aus diesem in den Endabschnitt 1b hinein zu entnehmen, sobald das Meßmedium die Windung 3 bzw. ggf. die mehreren Windungen 3 , durchströmt hat. Zur Bildung der Trennstelle 3e ist hier einer (3a) der beiden senkrechten Abschnitte in der Mitte, also in der Höhe der Drehachse 2 geteilt.

Der Schleifenteil 1c ist um eine zur Drehachse 2 senkrechte, ebenfalls in der vorgenannten Ebene gelegene Schwenkachse 4 verschwenkbar. Die letztere ist hier aus Gründen einer besseren Übersichtlichkeit der Zeichnung als mit der Mittelachse des senkrechten Windungsabschnittes 3a zusammenfallend dargestellt,
                                                              könnte

könnte aber prinzipiell bei entsprechender anderer Anordnung der Trennstelle 3e entlang der Achse 2 auch zwischen den senkrechten Abschnitten 3a, 3b oder in der Flucht der Mittelachse des anderen senkrechten Abschnitts 3b liegen.Bei der praktischen Ausführung wird sie vorzugsweise in der Mitte zwischen den senkrechten Windungsabschnitten 3a, 3b angeordnet, um eine Unwucht auszuschließen.

Die Verschwenkbarkeit des Schleifenteils 1c um die Schwenkachse 4 wird durch passende Gestaltung der abgedichteten Übergänge zwischen den Rohrendabschnitten 1a, 1b und dem Schleifenteil 1c oder durch passende Eigenelastizität des Schleifenteils 1c erreicht. Im letzteren Falle können die Rohrendabschnitte 1a, 1b und der Schleifenteil 1c aus einem Stück bestehen.

Ebenfalls bei allen Ausführungen gemäß der Zeichnung ist als Antriebsvorrichtung ein Motor 5 vorgesehen, mit dem das Rohr 1 um die Drehachse 2 in Richtung des Pfeiles 6 in Rotation versetzbar ist. Der Rohrabschnitt 1a geht als Hohlwelle durch den Motor 5 hindurch.

Die Rohrendabschnitte 1a, 1b reichen abgedichtet jeweils in feststehende Lager 7, die als Rohre verlängert sind und über die das Meßmedium in Richtung des Pfeiles 8 zugeführt bzw. in Richtung des Pfeiles 9 abgeleitet wird.

Bei allen Ausführungen gemäß der Zeichnung ist mit dem Schleifenteil 1c ein Geberelement starr verbunden, das mit einem ortsfesten Nehmerelement 11 als Abstandsaufnehmer zusammenarbeitet und mit diesem schon geringste Auslenkungen des Schleifenteils 1c um die Schwenkachse 4 feststellt und hier als diesen entsprechendes elektrisches Signal an einen Verstärker liefert. Das Geberelement ist hier ein starr mit dem senkrechten Windungsabchnitt 3b verbundener, den Rohrabschnitt 1b mit Abstand umgebender Ring, das Nehmerelement z. B. ein elektrooptischer oder elektromagnetischer Aufnehmer zum Messen des Abstandes zwischen ihm und dem Ring.

Bei

Bei allen Ausführungen entsteht - sobald sich das Rohr 1 mit dem Schleifenteil 1c dreht und der letztere von Meßmedium durchströmt wird - in den senkrechten Windungsabschnitten 3a, 3b eine der Drehzahl und dem Massendurchsatz durch sie entsprechendes Corioliskraft, die sich im senkrechten Abschnitt 3b mit Wirkungsrichtung gemäß Pfeil 13 dahingehend äußert, daß sie den Schleifenteil 1c um die Schwenkachse 4 zu verschwenken trachtet. Im Windungsabschnitt 3a hat die Corioliskraft hier eine solche Auswirkung nicht, weil dessen Mittelachse mit der Schwenkachse 4 zusammenfällt.

Dem aus der Corioliskraft im Windungsabschnitt 3b herrührenden Drehmoment steht bei allen Ausführungen ein einen Gleichgewichtszustand am Schleifenteil 1c herbeiführendes Gegenmoment entgegen, das bei den einzelnen Ausführungen auf unterschiedliche Weise erzeugt wird.

Bei der Ausführung nach Fig. 1 wird das Gegenmoment mittels einer Zugfeder 14 erzielt, die, zwischen eine mit dem Rohrendabschnitt 1a feste Aufhängung und eine mit dem Windungsabschnitt 3b feste Aufhängung gespannt, den Schleifenteil 1c in Richtung entgegen der Corioliskraft um die Schwenkachse 4 zu verschwenken trachtet. Die Verstärkung des Verstärkers 12 ist so eingestellt, daß schon kleinste Auslenkungen des Geberringes 10 aus seiner koaxialen Stellung bezüglich der Drehachse 2 , d.h. kleinste Änderungen der Lage der Ebene der Windung 3 bezüglich der die Drehachse 2 und die Schwenkachse 4 beinhaltenden Ebene , eine große Änderung des dem Motor 5 zugeführten Stromes oder dgl. in dem Sinne zur Folge haben, daß der Motor 5 schneller läuft, wenn die Auslenkung zur Feder hin erfolgen möchte und langsamer läuft, wenn sie in Richtung der Corioliskraft stattfinden möchte. Auf diese Weise wird die Corioliskraft durch Drehzahländerung des Motors 5 mittels des Regelkreises, in den der Schleifenteil 1c einbezogen ist, immer so eingeregelt, daß das von ihr verursachte Drehmoment dem im wesentlichen gleichbleibenden Drehmoment aus der Kraft der Feder 14 um diese Schwenkachse 4 bei im wesentlichen koaxial verbleibendem Geberring 10 das Gleichgewicht hält, und der

auf

auf irgendeine bekannte Weise ermittelte Kehrwert der Motordrehzahl, also die Dauer eines Umlaufs, bildet sodann streng linear
den Massendurchfluß durch das Rohr 1 ab.

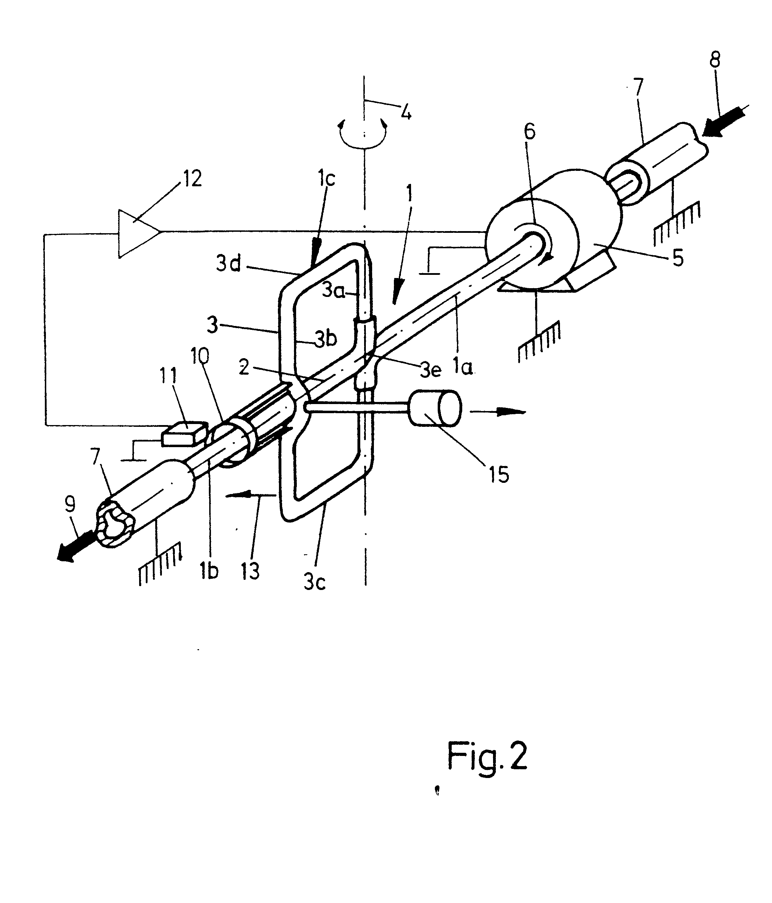

Bei der Ausführung nach Fig. 2 ist das generelle Prinzip hinsichtlich des Drehmoments das gleiche wie bei Fig. 1, hinsichtlich des Gegenmoments aber insoweit gegenüber der Ausführung
nach Fig. 1 abgewandelt, als hier die Federkraft durch die
Fliehkraft eines Fliehgewichts 15 ersetzt ist, so daß sich auch
das Gegenmoment mit der Drehzahl des Motors 5, und zwar quadratisch, ändert. Hier bildet somit die in bekannter Weise zu
ermittelnde Drehzahl des Motors 5 den Massendurchfluß streng
linear ab.

Die Ausführungen nach Fig. 1 und 2 haben den großen Vorteil,
daß das den Durchfluß linear proportional abbildende Signal unmittelbar digital zur Verfügung steht.

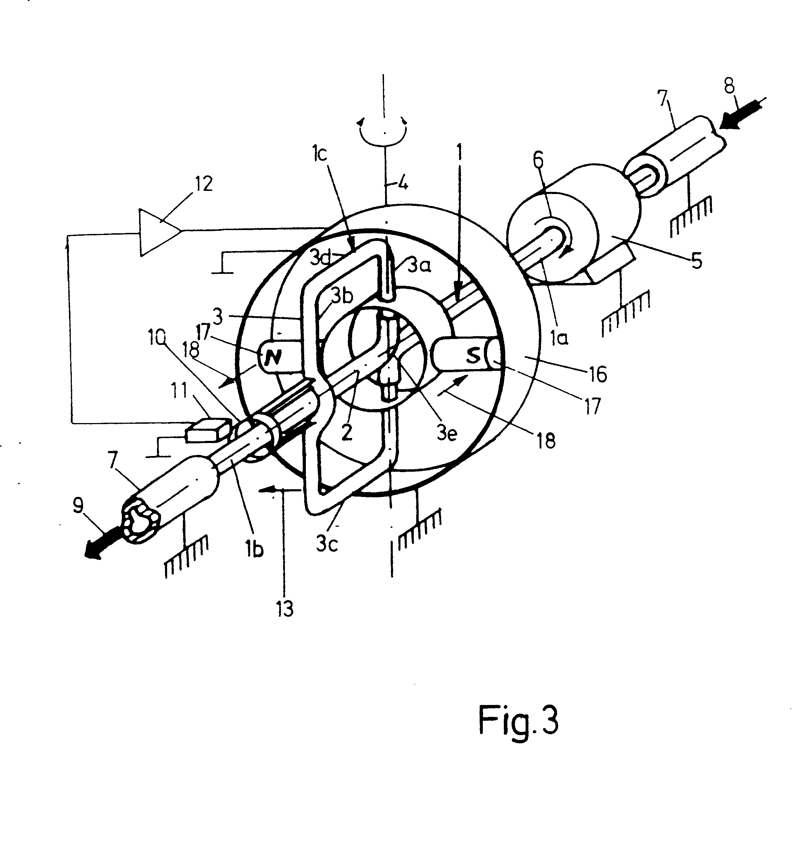

Bei der Ausführung nach Fig. 3 ist der Motor 5 mit konstanter
Drehzahl angetrieben, so daß sich die Corioliskraft streng linear mit dem Massendurchsatz durch das Rohr 1 bzw. den Windungsabschnitt 3b ändert. Dem hieraus resultierenden, linear
durchsatzabhängigen, Drehmoment um die Schwenkachse 4 wird ein
elektromagnetisch mit Hilfe einer Wicklung 16 und zweier starr
mit dem Windungsabschnitt 3a verbundener Permanentmagnete 17
erzeugtes Gegenmoment entgegengesetzt. Dieses Gegenmoment ist
linear proportional zu dem die Wicklung 16 durchfließenden
Strom, der über den Verstärker 12 so eingeregelt wird, daß
der Geberring 10 stets seine koaxiale Stellung bezüglich der
Drehachse 2 im wesentlichen beibehält. Der in bekannter Weise
zu messende und anzuzeigende Strom durch die Wicklung 16, der
ein eine Richtkraft in Richtung der Pfeile 18 auf die Permanentmagnete 17 ausübendes Magnetfeld innerhalb der Wicklung
16 erzeugt, ist sodann ein streng lineares Abbild für den
Massen-durchsatz durch das Rohr 1.

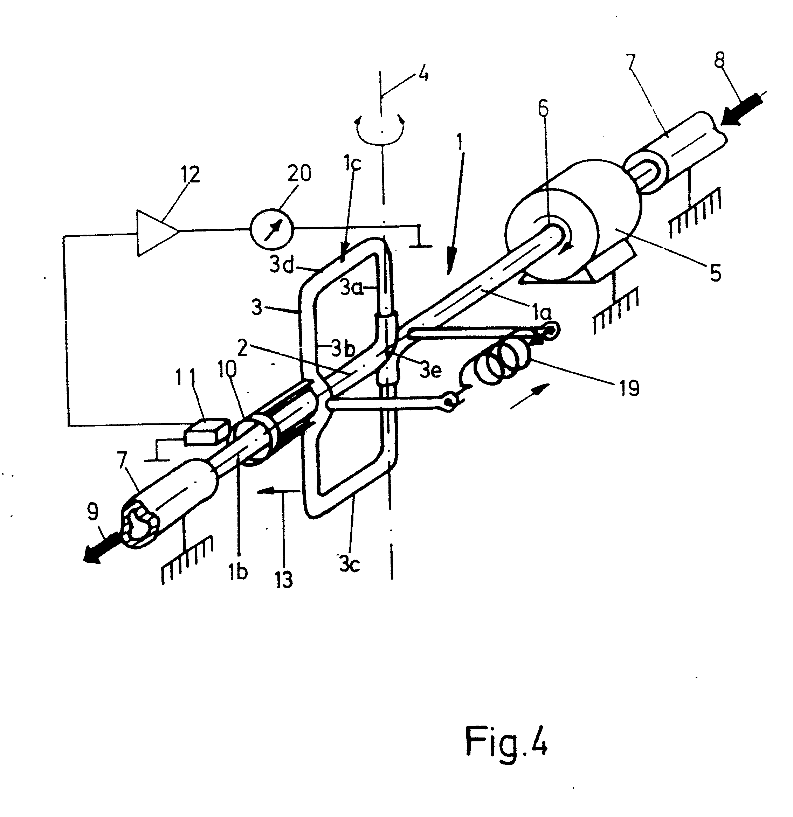

Auch die Ausführung nach Fig. 4 arbeitet, wie die Ausführung
nach Fig. 3, mit konstanter Drehzahl des Motors 5. Das Gegenmoment

0103200

moment erzeugt hier aber eine Feder 19 in der Fig. 1 entsprechender Aufhängung. Infolge dieser Gestaltungsmerkmale arbeitet die linear durchsatzproportionale Corioliskraft gegen eine
auslenkungsabhängige Federkraft. Auslenkungen des Geberringes
10 wird hier nicht entgegengewirkt, sondern diese sind innerhalb eines vorgegebenen Meßbereichs zugelassen, werden gemessen und als lineare Abbildung des Massendurchsatzes durch das
Rohr 1, hier im elektrischen Teil des Nehmers nach Verstärkung
an einem Meßinstrument 20, zur Anzeige gebracht.

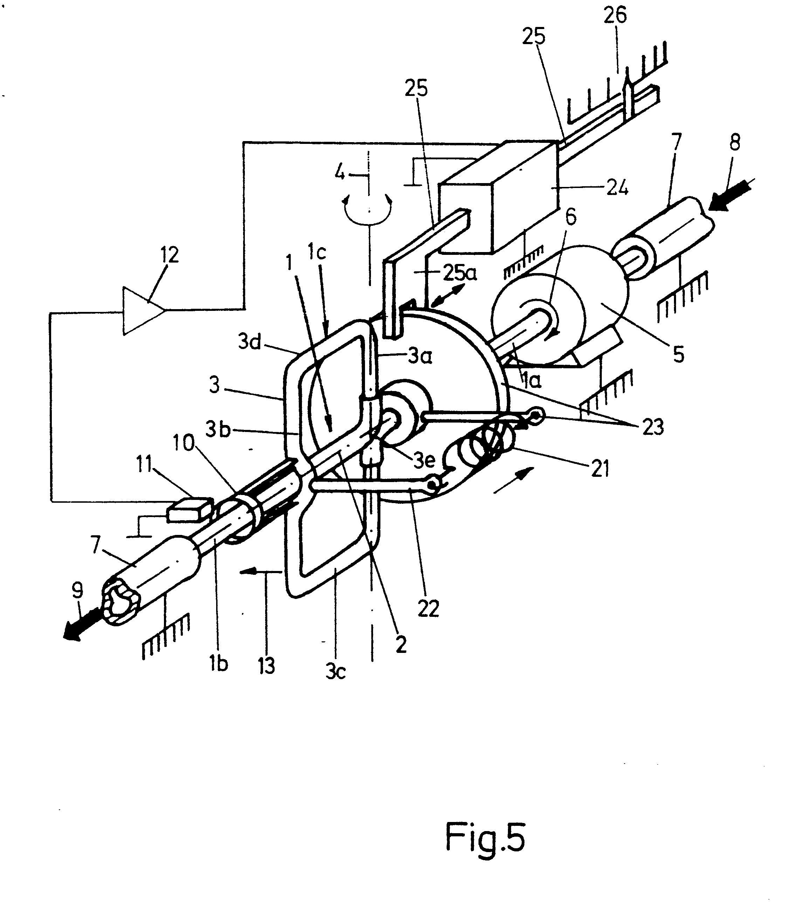

Auch die Ausführung nach Fig. 5 arbeitet mit konstanter Drehzahl des Motors 5 und einem federerzeugten Gegenmoment. Die
Zugfeder 21 ist hier zwischen einer mit dem Windungsabschnitt
3b starren Aufhängung 22 und einer - anders als bei den anderen
Ausführungen mit Feder - entlang dem Rohrabschnitt 1a verschiebbaren Aufhängung 23 gespannt. Eine Verschiebung der Aufhängung
23 hat eine Änderung des von der Feder erzeugten Gegenmoments
um die Schwenkachse 14 zur Folge. Die Verschiebung wird mittels
eines vom Nehmerelement 11 gesteuerten Antriebs 24 bei passend
gewählter Verstärkung des Verstärkers 12 über ein Gestänge 25
mit einem die Drehung der Aufhängung 23 nicht behindernden
Gabelkopf 25a so bewirkt, daß der Geberring 10 seine koaxiale
Stellung bezüglich der Achse 2 stets beibehält. Die Stellung
des Gestänges 25 ist sodann ein genau lineares Abbild des
Massendurchsatzes durch das Rohr 1 und hier an einer Skala 26
ablesbar.

In der Praxis wird die Anordnung so getroffen, daß sich der
Läufer des Motors 5 innerhalb eines geschlossenen Gehäuses befindet, das das Rohr 1 sowie die damit rotierenden Geräteteile
mit in das Gehäuse integrierten Festlagern 7 flüssigkeitsdicht
umschließt, so daß geringe Leckverluste zwischen diesen und
dem Rohr 1 zulässig sind. Der Motorständer befindet sich dabei
vorzugsweise außerhalb des Gehäuses.

P a t e n t a n s p r ü c h e

M.Z.: K 177/EP

1.  Massedurchflußmesser mit einem im Betrieb durch eine Antriebsvorrichtung um eine Drehachse in Winkelbewegung versetzten sowie um eine zur Drehachse senkrechte Schwenkachse
    verschwenkbaren Schleifenteil mit rohrförmigem Kanal, der
    das Meßmedium so leitet, daß es auf seinem Weg durch den
    Schleifenteil eine Abstandsänderung von der Drehachse erfährt und die hieraus resultierende Corioliskraft auf den
    Schleifenteil ein Drehmoment um die Schwenkachse ausübt,
    wobei im Durchflußmesser durch eine andere Kraft als die
    Corioliskraft ein Gegenmoment erzeugt wird, das Auslenkungen des Schleifenteils durch die Corioliskraft um die
    Schwenkachse entgegenwirkt, d a d u r c h  gekennzeichnet,
    daß der Schleifenteil (1c) durch die Antriebsvorrichtung (5)
    in Rotation versetzbar ist, so daß die vom Massendurchfluß
    im Schleifenteil (1c) bei der vorherrschenden Drehzahl verursachte Corioliskraft stets in gleicher Richtung um die
    Schwenkachse (4) auf den Schleifenteil (1c) einwirkt, und
    daß das durch die Corioliskraft verursachte Drehmoment und
    das Gegenmoment in einen Gleichgewichtszustand hinsichtlich
    ihrer Einwirkung auf den ᵇchleifenteil(1c ) gebracht und/
    oder in diesem gehalten werden.

2.  Massedurchflußmesser nach Anspruch 1, d a d u r c h  ge-
    kennzeichnet, daß die Stellung des Schleifenteils (1c) be-
    züglich der die Drehachse (2) und die Schwenkachse (4) beinhaltenden Ebene über den ganzen Meßbereich des Massedurchflußmessers hinweg im wesentlichen konstant gehalten
    wird. (Fig. 1-3 und 5)

3.  Massedurchflußmesser nach Anspruch 2, d a d u r c h  gekenn-
    zeichnet, daß das Konstanthalten der Stellung des Schleifen-
    teils (1c) mittels eines Regelkreises erfolgt, in den der
    Schleifenteil (1c) einbezogen ist.

                                    4. Massedurchflußmesser

4. Massedurchflußmesser nach Anspruch 2 oder 3, d a d u r c h gekennzeichnet, daß der Gleichgewichtszustand bei sich änderndem Durchfluß jeweils durch Ändern der Antriebsdrehzahl bei über den Meßbereich des Durchflußmessers konstant bleibendem Gegenmoment aufrechterhalten wird, so daß der Kehrwert der Drehzahl den Durchfluß linear proportional abbildet.

5. Massedurchflußmesser nach Anspruch 4, d a d u r c h gekennzeichnet, daß das Gegenmoment durch eine Feder (14) von konstanter Spannung erzeugt wird.

6. Massedurchflußmesser nach Anspruch 2 oder 3, d a d u r c h gekennzeichnet, daß der Gleichgewichtszustand bei sich änderndem Durchfluß durch Ändern der das Gegenmoment verursachenden Kraft bei über den Meßbereich des Durchflußmessers konstant bleibender Antriebsdrehzahl aufrechterhalten wird, so daß diese Kraft den Durchfluß linear proportional abbildet. (Fig.3 und 5)

7. Massedurchflußmesser nach Anspruch 6, d a d u r c h gekennzeichnet, daß die das Gegenmoment verursachende Kraft elektromagnetisch erzeugt und der hierzu linear proportinale Strom gemessen und als Maß für den Massendurchfluß angezeigt wird. (Fig. 3)

8. Massedurchflußmesser nach Anspruch 6, d a d u r c h gekennzeichnet, daß die das Gegenmoment hervorrufende Kraft durch eine Feder (21) von variabler Spannung erzeugt wird, deren Spannung durch Verschieben einer (23) ihrer Aufhängungen (22,23) verändert wird, wobei die zur Spannung linear proportionale Verschiebestrecke gemessen und als Maß für den Durchfluß angezeigt (25,26) wird. (Fig. 5)

9. Massedurchflußmesser nach Anspruch 2 oder 3, d a d u r c h gekennzeichnet, daß der Gleichgewichtszustand bei sich änderndem Durchfluß durch Ändern der Antriebsdrehzahl und

der

0103200

der von dieser quadratisch abhängig eingerichteten Kraft zum Erzeugen des Gegenmoments aufrechterhalten wird, so daß die Drehzahl den Durchfluß linear proportional abbildet. (Fig. 2)

10. Massedurchflußmesser nach Anspruch 9, d a d u r c h gekennzeichnet, daß die das Gegenmoment hervorrufende Kraft durch ein im Abstand von der Schwenkachse (4) an dem Schleifenteil (1c) starr angreifendes Fliehgewicht (15) erzeugt wird. (Fig. 2)

11- Massedurchflußmesser nach Anspruch 1, d a d u r c h gekennzeichnet, daß die Stellung des Schleifenteils (1c) bezüglich der die Drehachse (2) und die Schwenkachse (4) beinhaltenden Ebene unter der Wirkung der Corioliskraft sowie unter Änderung des Gegenmoments veränderbar ist, wobei die Änderung der Stellung und die Änderung des Gegenmoments etwa linear voneinander abhängig sind, und daß die vorgenannte Stellung ermittelt (10,11,12) und als zum Durchfluß etwa linear proportionales Maß angezeigt (20) wird.

12. Massedurchflußmesser nach Anspruch 11, d a d u r c h gekennzeichnet, daß die das Gegenmoment hervorrufende Kraft von einer Feder (19) erzeugt wird, deren Spannung etwa linear abhängig von der relativen Stellung des Schleifenteils (1c) und der die Drehachse (2) und die Schwenkachse (4) beinhaltenden Ebene veränderlich ist.

13. Massedurchflußmesser nach einem der vorhergehenden Ansprüche, d a d u r c h gekennzeichnet, daß der rohrförmige Kanal im Schleifenteil (1c) mindestens eine sich über 360 Grad erstreckende, vollständige Windung (3) bildet.

14. Massedurchflußmesser nach Anspruch 13, d a d u r c h gekennzeichnet, daß die Windung (3), jedenfalls in der dem Durchfluß (0) entsprechenden Nullstellung des Schleifenteils (1c), zu der Drehachse (2) und der diese sowie die

- 4 -

0103200

Schwenkachse (4) beinhaltenden Ebene im wesentlichen symmetrisch ist und mit ihrer Ebene zu der letzteren etwa parallel liegt.

15. Massedurchflußmesser nach Anspruch 13 oder 14, d a d u r c h gekennzeichnet, daß der Schleifenteil (1c) mehrere nebeneinander befindliche, in Serie untereinander verbundene Windungen (3) aufweist.

16. Massedurchflußmesser nach einem der Ansprüche 13 - 15, d a d u r c h gekennzeichnet, daß jede Windung (3) im Schleifenteil (1c) aus zwei zur Drehachse (2) etwa senkrechten Abschnitten (3a,3b) und zwei zur Drehachse (2) etwa parallelen Abschnitten (3c,3d) gebildet ist.

17. Massedurchflußmesser nach Anspruch 16, d a d u r c h gekennzeichnet, daß die Schwenkachse (4) im Schleifenteil (1c) etwa in der Mitte zwischen den beiden zu einer Windung (3) gehörenden senkrechten Abschnitten (3a,3b) angeordnet ist.

18. Massedurchflußmesser nach einem der Ansprüche 13 - 17, d a d u r c h gekennzeichnet, daß das Meßmedium auf der Höhe der Drehachse (2) in die Windung (3) oder den Verbund von Windungen (3) eingeleitet und daraus herausgeleitet wird.

19. Massedurchflußmesser nach einem der vorhergehenden Ansprüche, d a d u r c h gekennzeichnet, daß die Schwenkachse (4) für den Schleifenteil (1c) die Drehachse (2) schneidet.

Fig.1

0103200

Fig. 2

Fig.3

Fig.4

Fig.5